(19) **Europäisches Patentamt / European Patent Office / Office européen des brevets**

(11) **EP 4 354 975 A1**

(12) # EUROPEAN PATENT APPLICATION
published in accordance with Art. 153(4) EPC

(43) Date of publication:
**17.04.2024 Bulletin 2024/16**

(21) Application number: **22820338.6**

(22) Date of filing: **10.06.2022**

(51) International Patent Classification (IPC):
**H04W 52/02** $^{(2009.01)}$ **H04W 76/27** $^{(2018.01)}$

(52) Cooperative Patent Classification (CPC):
**H04W 52/02; H04W 76/27**

(86) International application number:
**PCT/JP2022/023424**

(87) International publication number:
**WO 2022/260160 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.06.2021 JP 2021098135**

(71) Applicants:
• **DENSO CORPORATION**
  **Kariya-city, Aichi 448-8661 (JP)**

• **TOYOTA JIDOSHA KABUSHIKI KAISHA**
  **Toyota-shi**
  **Aichi 471-8571 (JP)**

(72) Inventors:
• **SOGABE, Haruhiko**
  **Kariya- city, Aichi 448-8661 (JP)**
• **TAKAHASHI, Hideaki**
  **Kariya- city, Aichi 448-8661 (JP)**

(74) Representative: **TBK**
**Bavariaring 4-6**
**80336 München (DE)**

(54) **TERMINAL AND WIRELESS COMMUNICATION METHOD**

(57) A terminal includes: a receiving unit which receives a discontinuous reception parameter for an RRC idle state and a discontinuous reception parameter for an RRC inactive state; and a control unit which controls a discontinuous reception operation in the RRC inactive state in accordance with the discontinuous reception parameter for the RRC idle state instead of the discontinuous reception parameter for the RRC inactive state.

Fig. 17

EP 4 354 975 A1

## Description

### Cross-Reference to Related Application

This application is based on and claims priority to Japanese Patent Application No. 2021-098135, filed June 11, 2021, the entire contents of which are incorporated herein by reference.

### Technical Field

This disclosure relates to a terminal and a wireless communication method.

### Background Art

In the 3rd Generation Partnership Project (3GPP) as an international standards organization, New Radio (NR) Release 15 as the 5th generation (5G) RAT (Radio Access Technology) is specified as a successor to Long Term Evolution (LTE) as the 3.9th generation RAT and LTE-Advanced as the 4th generation RAT (for example, Non-Patent Document 1).

Further, considering such a terminal that power consumption is further limited in LTE (Long Term Evolution) like IoT (Internet of Things) equipment, technology called eDRX (extended Discontinuous Reception) to reduce power consumption by limiting a period capable of receiving a radio signal is introduced (for example, Non-Patent Document 2).

Citation List

Non-Patent Documents

   Non-Patent Document 1: 3GPP TS 38.300 V15.11.0 (2020-09)
   Non Patent Document 2: 3GPP TS 36.300 V15.12.0 (2020-12)

### Summary of Invention

In the 3GPP, the consideration of functions on the assumption of a new terminal for IoT performing radio access using NR is started so far. Further, eDRX described above is included in the functions being considered. Further, in NR, it is considered that an RRC (Radio Resource Control) idle state and an RRC inactive state may have different configurations for eDRX.

Here, there is such a case that, for some reason, an RRC state recognized by a terminal is different from an RRC state recognized by a network (a base station and/or a core network). In order that the terminal can receive radio signals even in such a case, it is conceivable that the terminal operates in accordance with both an eDRX configuration for the RRC idle state and an eDRX configuration for the RRC inactive state. However, the terminal should receive radio signals in accordance with both of the configurations, and this might increase electric power to be consumed by the terminal.

One object of this disclosure is to provide a terminal and a wireless communication method each of which is able to reduce an increase in electric power to be consumed by a terminal.

A terminal according to one aspect of this disclosure includes: a receiving unit which receives a discontinuous reception parameter for an RRC idle state and a discontinuous reception parameter for an RRC inactive state; and a control unit which controls a discontinuous reception operation in the RRC inactive state in accordance with the discontinuous reception parameter for the RRC idle state instead of the discontinuous reception parameter for the RRC inactive state.

With this disclosure, it is possible to provide a terminal and a wireless communication method each of which is able to reduce an increase in electric power to be consumed by a terminal.

### Brief Description of Drawings

   Fig. 1 is a diagram illustrating an example of the overview of a wireless communication system according to the present embodiment.

Fig. 2 is a diagram illustrating an example of transition of the state of a terminal.

Fig. 3 is a diagram to describe the operation of DRX.

Fig. 4 is a diagram to describe the operation of eDRX.

Fig. 5 is a diagram illustrating a pattern where a PTW in an inactive state and a PTW in an idle state overlap with each other.

Fig. 6 is a diagram illustrating a pattern where the PTW in the inactive state and the PTW in the idle state do not overlap with each other.

Fig. 7 is a diagram illustrating an example of a routine in a case where an eDRX parameter for the idle state is configured by a core network for the terminal.

Fig. 8 is a diagram illustrating an example of a routine in a case where an eDRX parameter for the inactive state is configured by a base station for the terminal.

Fig. 9 is a flowchart to describe the operation of eDRX in the inactive state.

Fig. 10 is a diagram illustrating a specification change example of 3GPP specifications.

Fig. 11 is a diagram illustrating a specification change example of 3GPP specifications.

Fig. 12 is a diagram illustrating a specification change example of 3GPP specifications.

Fig. 13 is a diagram illustrating a specification change example of 3GPP specifications.

Fig. 14 is a diagram illustrating a specification change example of 3GPP specifications.

Fig. 15 is a diagram illustrating a specification change example of 3GPP specifications.

Fig. 16 is a diagram illustrating an example of the hardware configuration of each equipment in the wireless communication system.

Fig. 17 is a diagram illustrating an example of the functional configuration of the terminal.

**Description of Embodiments**

With reference to the attached drawings, the following describes the present embodiment. In order to facilitate understanding of the description, identical constituents in the drawings have the same reference sign as far as possible, and redundant descriptions are omitted.

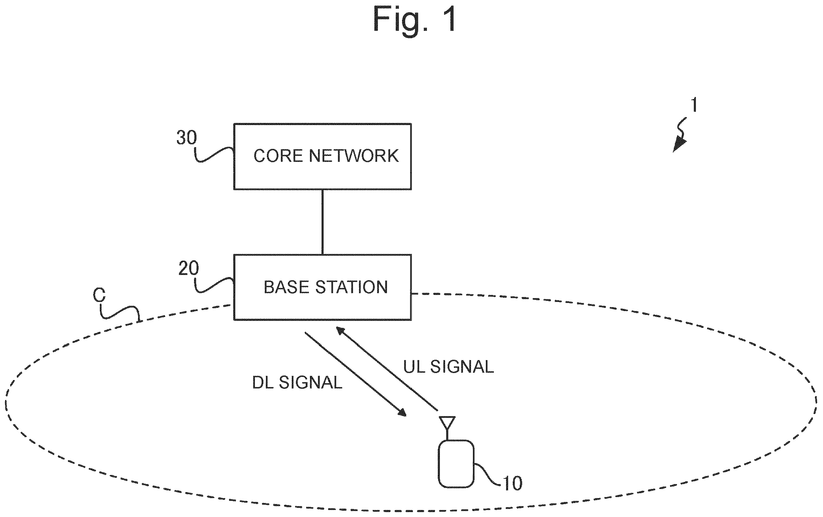

Fig. 1 is a diagram illustrating an example of the overview of a wireless communication system according to the present embodiment. As illustrated in Fig. 1, a wireless communication system 1 may include a terminal 10, a base station 20, and a core network 30. Note that the number of terminals 10 and base stations 20 illustrated in Fig. 1 is just an illustrative example, and the number is not limited to that illustrated.

As Radio Access Technology (RAT) of the wireless communication system 1, for example, NR is assumed, but it is not limited to NR, and various RATs can be utilized, such as LTE, LTE-Advanced, the 6th generation (6G) RAT or later.

The terminal 10 is a given terminal or equipment such as a smartphone, a personal computer, an in-vehicle terminal, an in-vehicle device, a stationary device, or a telematics control unit (TCU), for example. The terminal 10 may also be called User Equipment (UE), a Mobile Station (MS), a terminal (User Terminal), a radio apparatus, a subscriber terminal, an access terminal, or the like. The terminal 10 may be of a mobile type or a fixed type. The terminal 10 is configured communicably using NR as RAT, for example.

Here, in NR Release 17, support for functions for a terminal on the assumption of lower performance and price range than a terminal for enhanced Mobile Broadband (eMBB) or Ultra-reliable and Low Latency Communications (URLLC) introduced in Release 15 or 16 is being considered. Such a terminal is also called a reduced capability (RedCap) terminal or device, which is assumed to be utilized, for example, in an industrial wireless sensor, a surveillance camera (video surveillance), or a wearable device.

The RedCap terminal is assumed to have higher performance than a terminal for Low Power Wide Area (LPWA), and a carrier used by the RedCap terminal may have a bandwidth of 20 MHz, 50 MHz, 100 MHz, or the like, for example. Further, the maximum terminal bandwidth (the maximum UE bandwidth) supported by a RedCap terminal may be, for example, 20 MHz for Frequency Range 1 (for example, frequency bandwidths of 6 GHz or less), and 100 MHz for Frequency Range 2 (for example, frequency bandwidths higher than 6 GHz). Note that, for example, there are Long Term Evolution for Machine-type-communication (LTE-M) working with LTE-type RAT in Category 1, Narrow Band IoT (NB-IoT) as LPWAs, and so on. The maximum bandwidth for Category 1 is 20 MHz, the maximum bandwidth for LTE-M is 1.4 MHz (6 RB), and the maximum bandwidth for NB-IoT is 180 kHz (1 RB). Thus, the RedCap terminal is expected to be used as a middle-range terminal between use for eMBB or URLLC and use for LPWA. The RedCap terminal and a terminal for LPWA are included as the terminal 10 according to the present embodiment.

The base station 20 forms one or more cells C to communicate with the terminal 10 using each of the cells C. The cell C may also be mutually rephrased as a serving cell, a carrier, a component carrier (CC), and the like. The base station 20 may also be called a gNodeB (gNB), an en-gNB, a Next Generation-Radio Access Network (NG-RAN) node, an eNB, a low-power node, a Central Unit (CU), a Distributed Unit (DU), a gNB-DU, a Remote Radio Head (RRH), an Integrated Access and Backhaul/Backhauling (IAB) node, or the like. The base station 20 is not limited to one node and may be constituted by a plurality of nodes (for example, a combination of a lower node such as a DU and an upper node such as a CU).

The core network 30 is, for example, an NR-compatible core network (5G Core Network: 5GC), but the core network 30 is not limited thereto. A device on the core network 30 (hereinafter, which may also be called a "core network device") performs mobility management such as paging and location registration of the terminal 10. The core network device may be connected to the base station 20 through a given interface (for example, S1 or NG interface).

The core network device includes, for example, at least one of multiple functions such as AMF (Access and Mobility Management Function) for managing information related to access and mobility management, SMF (Session Management Function) for session management, User Plane Function (UPF) for U plane transmission control, and NSSF (Network Slice Selection Function) for network slice management. Each of these functions is implemented in one or more physical or logical devices.

In the wireless communication system 1, the terminal 10 receives a downlink (DL) signal from the base station 20 and/or transmits an uplink signal (UL). In the terminal 10, one or more carriers may be configured. The bandwidth of each carrier is, for example, in a range of 5 MHz to 400 MHz. One or more bandwidth parts (BWPs) may be configured on one carrier. One BWP has at least part of the bandwidth of the carrier.

<UE State>

Next will be described an RRC state of the terminal 10, defined in NR. The RRC state of the terminal 10 includes an RRC idle state (hereinafter referred to as an "idle state"), an RRC inactive state (hereinafter referred to as an "inactive state"), and an RRC connected state (hereinafter referred to as a "connected state").

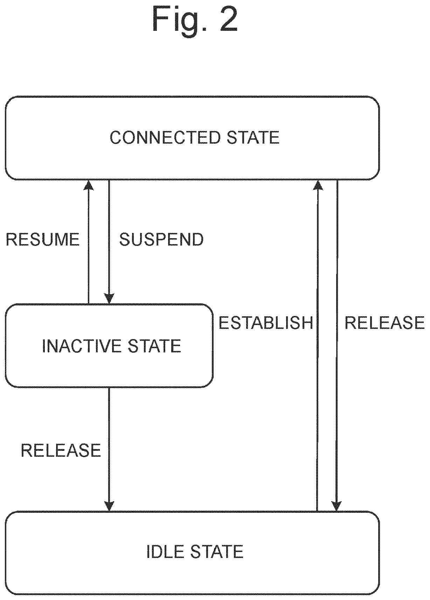

Fig. 2 is a diagram illustrating an example of transition of the state of the terminal 10. In Fig. 2, the idle state is a state where an RRC connection between the terminal 10 and the base station 20 is not established and is also called RRC_IDLE, an idle mode, an RRC idle mode, or the like.

The terminal 10 in the idle state camps on a cell C selected by cell selection and/or cell reselection (hereinafter referred to as "cell selection/reselection") and receives system information broadcast in the cell C. When the RRC connection is established, the terminal 10 in the idle state transitions to the connected state.

The inactive state is a state where an RRC connection is established but is suspended and is also called RRC_INACTIVE, an inactive mode, an RRC inactive mode, or the like. The inactive state does not exist in LTE and is a RRC state newly defined in NR. The terminal 10 in the inactive state camps on a cell C selected by cell selection/reselection and receives system information broadcast in the cell C. Like the idle state, the inactive state can save power of the terminal 10, but unlike the idle state, an RRC context and a NAS context are held among the terminal 10, the base station 20, and the core network 30.

The core network 30 manages the position of the terminal 10 by a unit called TA (Tracking Area), and the core network 30 instructs a plurality of base stations 20 to transmit a paging signal, the plurality of base stations 20 constituting TA in which the terminal 10 to be called is present. Further, one or more base stations 20 that has received the instruction transmit paging signals all at once.

Further, in NR, a RAN notification area (RNA) as an area obtained by subdividing a TA (Tracking Area) is newly defined, and the base station 20 manages the RAN notification area in which the terminals 10 in the connected state and the inactive state are present. Further, in NR, technology called "RAN paging" for performing paging in units of RAN notification areas used to call the terminal 10 in the inactive state is introduced. In RAN paging, all paging signals are transmitted at once from two or more base stations 20 constituting each RAN notification area in which the terminal 10 in the inactive state is present. The terminal 10 in the inactive state that has received a paging signal resumes the RRC connection and transitions to the connected state. In the following description, a process of transmitting paging signals in units of TAs in response to the instruction from the core network 30 is referred to as "CN paging," distinguished from "RAN paging." Further, in a case where CN paging is not distinguished from RAN paging, CN paging is referred to as "paging."

The connected state is a state where the RRC connection is established and is also called RRC_CONNECTED, a connected mode, an RRC connected mode, and the like. The terminal 10 in the connected state monitors PDCCH (Physical Downlink Control Channel) and controls reception of PDSCH (Physical Downlink Shared Channel) based on detected DCI (Downlink Control Information). When the RRC connection is released, the terminal 10 in the connected state transitions to the idle state, and when the RRC connection is suspended, the terminal 10 transitions to the inactive state.

<eDRX Technology>

Next will be described eDRX (extended DRX) technology according to the present embodiment. In NR, a slot with a variable length of time, a subframe with a length of time of 1 ms, a radio frame with a length of time of 10 ms, and a hyperframe with a length of time of 10.24 seconds are defined. The position of each radio frame is represented by a number in SFNs (System Frame Numbers) of 0 to 1023. Further, in order to manage a length of time longer than that of the 1024 radio frames, a hyperframe with a length of time of the SFN (that is, 10.24 seconds) of the 0 to 1023 radio frames is defined. The hyperframe is represented by a number in H-SFNs (Hyper-SFN (System Frame Numbers)) of 0 to 1023.

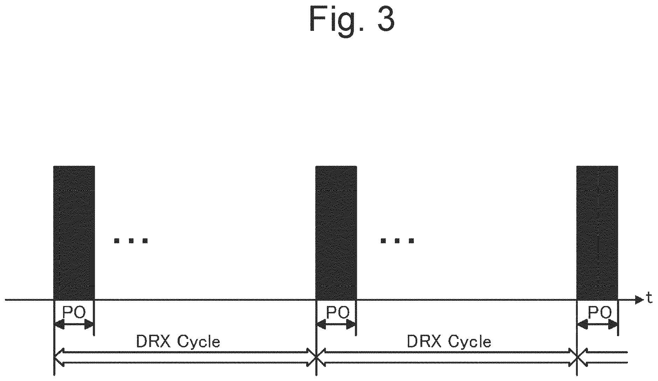

Fig. 3 is a diagram to describe the operation of DRX (Discontinuous Reception). As illustrated in Fig. 3, the terminal 10 in the idle state or the inactive state monitors downlink control channel candidates (PDCCH candidates) during periods called POs (Paging Occasions) to receive paging signals. While the terminal 10 is working according to the DRX configuration, the base station 20 transmits paging signals during the PO periods and does not transmit paging signals during the other periods. The terminal 10 that has received a paging signal in each PO period establishes communication with the base station 20 and transitions to the connected state. The DRX cycle is a maximum of 2.56 seconds.

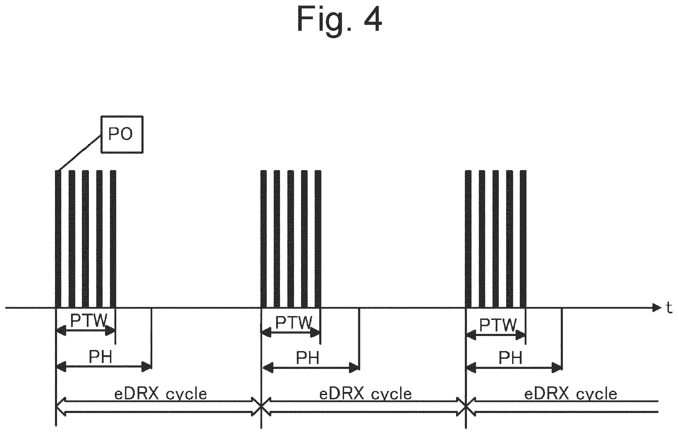

Fig. 4 is a diagram to describe the operation of eDRX. As illustrated in Fig. 4, the terminal 10 in the idle state or the inactive state monitors downlink control channel candidates in PO periods within each period called a PTW (Paging Time Window) to receive paging signals. One PTW is configured in each hyperframe called a PH (Paging Hyperframe). One PH may be present in each eDRX cycle.

While the terminal 10 is working according to the eDRX configuration, the base station 20 transmits a paging signal during each PTW period and each PO period and does not transmit any paging signal during the other periods. The terminal 10 that has received a paging signal establishes communication with the base station 20 and transitions to the connected state.

Here, the PH may be an H-SFN that satisfies Math. 1 below.

$$(\text{Math. 1})$$

$$\text{H-SFN mod } T_{eDRX,H} = (\text{UE\_ID\_H mod } T_{eDRX,H})$$

"$T_{eDRX,H}$" indicates the eDRX cycle, which is configured with a length of an integral multiple of the Hyperframe. The UE_ID_H is 10 or 12 most significant bits of a hashed ID defined based on 5G-S-TMIS (5G S-Temporary Mobile Subscriber Identity).

An SFN as the starting position of the PTW (PTW_start) (start timing) may be expressed by Math. 2 and Math. 3 below.

$$(\text{Math. 2})$$

$$\text{SFN} = 256 * ieDRX$$

$$(\text{Math. 3})$$

$$ieDRX = \text{floor}(\text{UE\_ID\_H}/\text{TeDRX,H}) \bmod 4$$

An SFN as the ending position of the PTW (PTW_end) (end timing) may be expressed by Math. 4 below.

$$(\text{Math. 4})$$

$$\text{SFN} = (\text{PTW\_start} + L * 100 - 1) \bmod 1024$$

L is a time length of the PTW (Paging Time Window length). A parameter (hereinafter referred to as "eDRX parameter") to determine the eDRX operation, e.g., the eDRX cycle, the time length of the PTW, and the like, is configured in the terminal 10 by use of a higher layer (NAS (Non Access Stratum)) message, an RRC message, broadcast information, or the like.

In the following description, the "eDRX parameter" may indicate only the parameter to determine the eDRX operation, e.g., the eDRX cycle, the time length of the PTW, or the like, or may indicate that a parameter to determine the DRX operation, e.g., the DRX cycle, the configuration of a PO position, or the like, is also included in addition to the parameter to determine the eDRX operation.

Further, in the present embodiment, an "eDRX parameter for the inactive state" indicates an eDRX parameter applied to the terminal 10 in the inactive state. Further, an "eDRX parameter for the idle state" indicates an eDRX parameter applied to the terminal 10 in the idle state.

Further, in the present embodiment, the eDRX parameter for the idle state and the eDRX parameter for the inactive state may be different from each other.

<Problem to achieve eDRX both in Idle State and Inactive State>

The RRC state of the terminal 10 is managed both by the terminal 10 and by the network (the base station 20 and/or the core network 30). Generally, the RRC state managed by the terminal 10 is the same as the RRC state managed by the network. However, in a case where the context (context of RRC) of a UE is lost due to software abnormality in the base station 20 or the like, for example, the terminal 10 and the network may be inconsistent in terms of the RRC state of the terminal 10 for some reason.

Accordingly, in a case where the occurrence of such an inconsistent state is taken into account, in order to receive paging signals without exception, it is desired that the terminal 10 performs the eDRX operation according to both the eDRX parameter for the idle state and the eDRX parameter for the inactive state, regardless of whether the terminal 10 recognizes that it is in the idle state or the terminal 10 recognizes that it is in the inactive state.

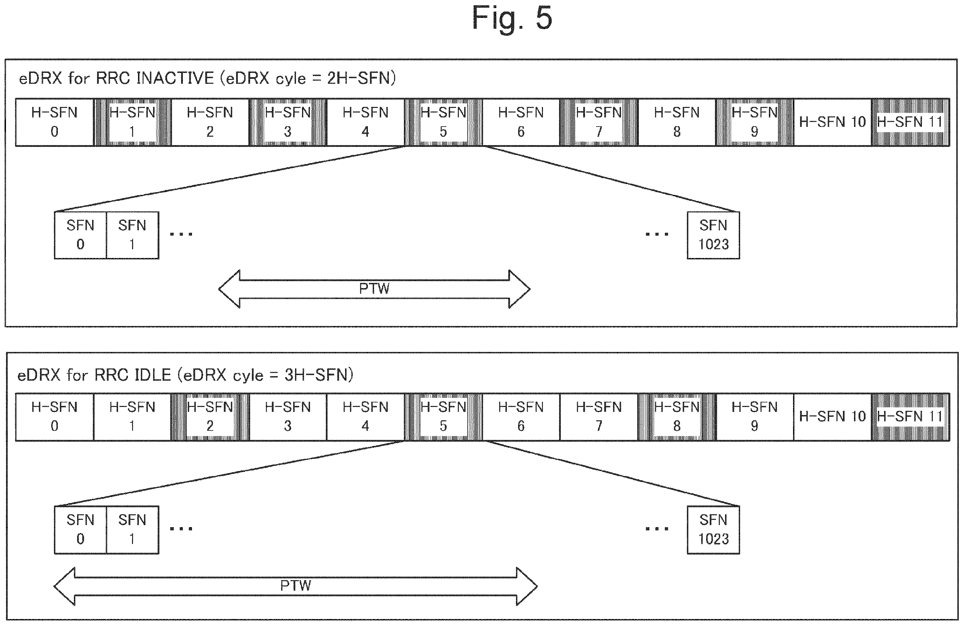

Fig. 5 is a diagram illustrating a pattern where a PTW in the inactive state and a PTW in the idle state overlap with each other. The upper side of Fig. 5 illustrates the eDRX operation in the inactive state, and the lower side of Fig. 5 illustrates the eDRX operation in the idle state. In the example of Fig. 5, a PH in the inactive state and a PH in the idle state overlap with each other at the fifth H-SFN. Further, part of the PTW in the idle state overlaps with the PTW in the inactive state. In this case, the terminal 10 starts a receiving circuit in accordance with the eDRX parameter for the idle state in the fifth H-SFN and monitors downlink control channel candidates, and when the PTW in the idle state is ended, the terminal 10 stops the receiver circuit.

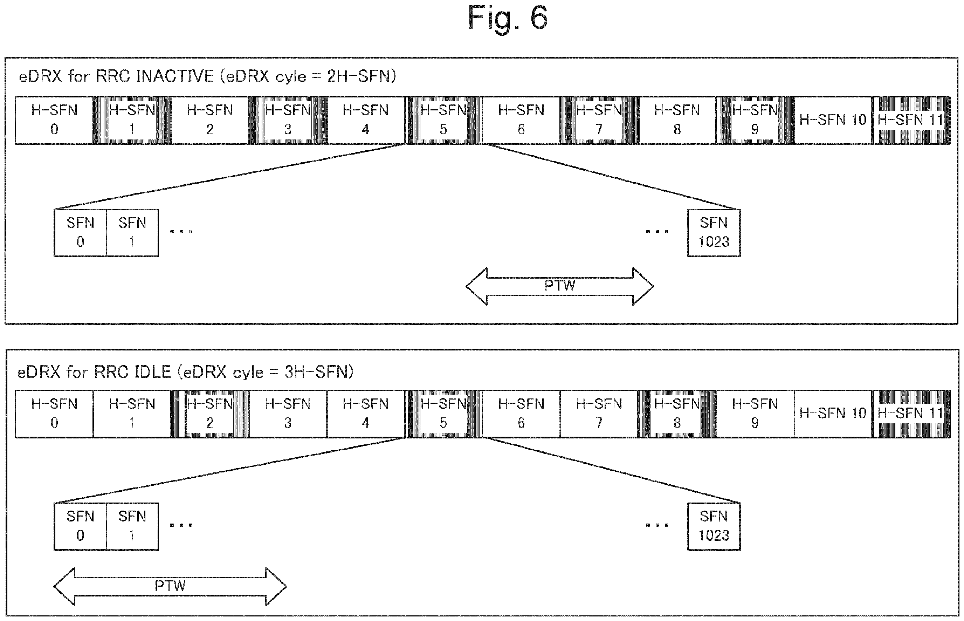

Fig. 6 is a diagram illustrating a pattern where the PTW in the inactive state and the PTW in the idle state do not overlap with each other. The upper side of Fig. 6 illustrates the eDRX operation in the inactive state, and the lower side of Fig. 6 illustrates the eDRX operation in the idle state. In the example of Fig. 6, the PH in the inactive state overlaps with the PH in the idle state at the fifth H-SFN. In the meantime, unlike Fig. 5, the PTW in the idle state and the PTW in the inactive state do not overlap with each other. In this case, in the fifth H-SFN, the terminal 10 performs such an operation that the terminal 10 starts the receiving circuit in accordance with the PTW in the idle state to monitor downlink control channel candidates, stops the receiver circuit when the TW is ended, and then, the terminal 10 starts the receiving circuit in accordance with the PTW in the inactive state to monitor downlink control channel candidates and stops the receiver circuit when the PTW is ended. That is, in the same H-SFN, the terminal 10 performs a process of starting the receiving circuit twice.

Thus, in a case where the PH in the inactive state and the PH in the idle state overlap with each other, and the PTW in the inactive state and the PTW in the idle state do not overlap with each other in the PHs, it is necessary for the terminal 10 to start its receiving circuit twice in the PH thus overlapping, so that electric power to be consumed by the terminal 10 may increase.

In view of this, in the present embodiment, in a case where the terminal 10 transitions to the inactive state, the starting position of the PTW in the idle state or the starting position of the PTW in the inactive state are made the same as (aligned with) the starting position of the PTW in the other state. Hereby, the process of starting the receiving circuit in the same H-SFN is performed once, thereby making it possible to reduce an increase in electric power to be consumed by the terminal 10.

<Configuration of eDRX parameters for Idle State and Inactive State>

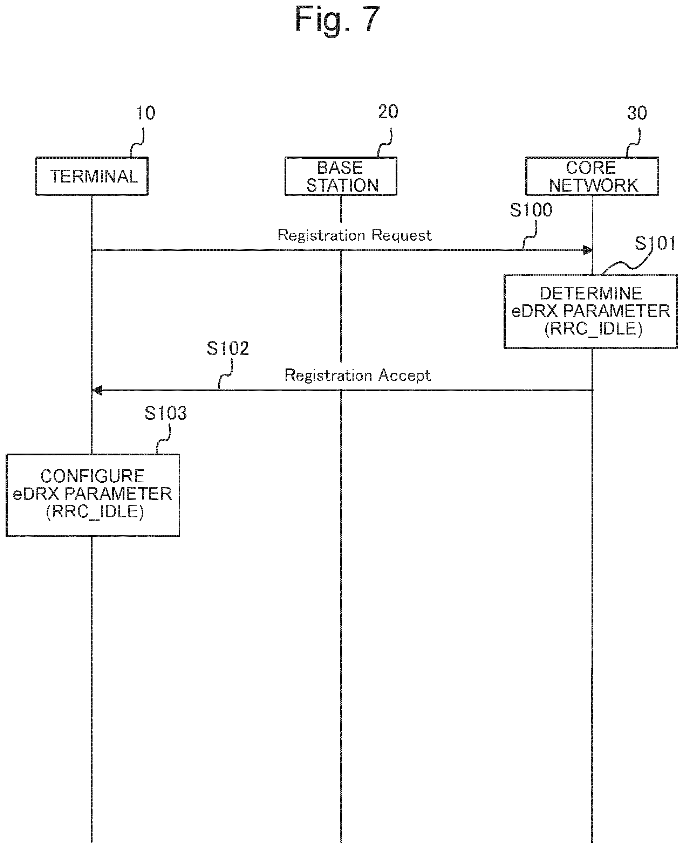

Fig. 7 is a diagram illustrating an example of a routine in a case where the eDRX parameter for the idle state is configured by the core network 30 for the terminal 10. Note that it is assumed that the core network 30 is AMF, for example, but the core network 30 is not limited to this.

In step S100, the terminal 10 desiring to validate eDRX transmits, to the core network 30, a Registration Request message including an "eDRX parameter" indicative of an eDRX operation desired to be configured. In step S101, the core network 30 determines an eDRX parameter for the idle state based on the registration request received from the terminal 10. In step S102, in order to configure the determined eDRX parameter in the terminal 10, the core network 30 transmits, to the terminal 10, an NAS message (in particular, a Registration Accept message) including the determined eDRX parameter for the idle state. In step S103, the terminal 10 configures the eDRX parameter for the idle state, included in the NAS message (that is, the terminal 10 stores the eDRX parameter for the idle state in a storage device).

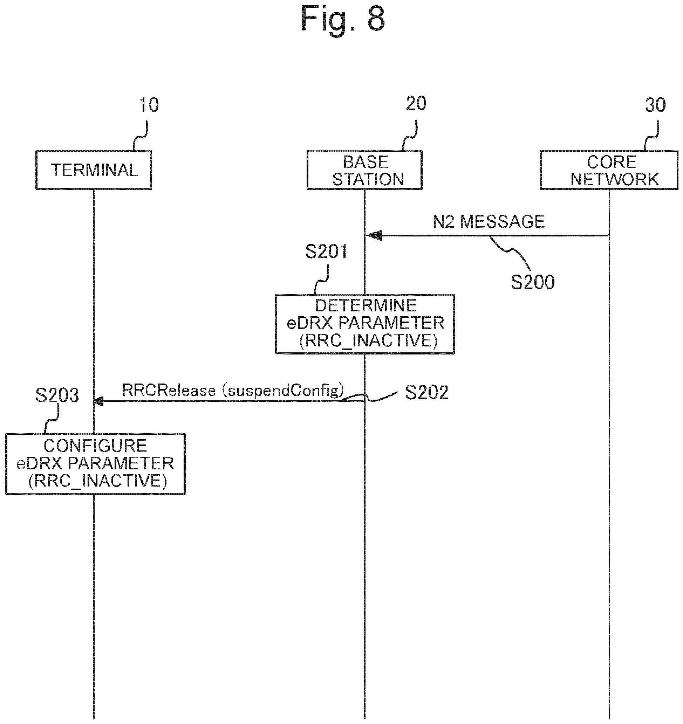

Fig. 8 is a diagram illustrating an example of a routine in a case where the eDRX parameter for the inactive state is configured by the base station 20 for the terminal 10.

In step S200, the core network 30 transmits, to the base station 20, an N2 message including information indicating that the terminal 10 desires to validate eDRX, for example. The N2 message includes core network assistance information related to RRC inactive (Core Network Assistance Information for RRC INACTIVE), and the core network assistance information may include information indicating that the terminal 10 desires to validate eDRX.

In step S201, the base station 20 determines an eDRX parameter for the inactive state to be configured in the terminal 10. In step S202, at the time when the base station 20 instructs the terminal 10 to transition to the inactive state, the base station 20 transmits, to the terminal 10, an RRC Release message in which the eDRX parameter for the inactive state, determined in step S201, is included in a suspend configuration (SuspendConfig). In step S203, the terminal 10 configures the eDRX parameter for the inactive state, included in the RRC Release message (the terminal 10 stores the eDRX parameter in the storage device).

Note that the eDRX parameter in the inactive state may be configured in the terminal 10 by use of the NAS message from the core network 30, using the routine illustrated in Fig. 7. In this case, the routine illustrated in Fig. 8 is omitted.

<eDRX Operation in Inactive State>

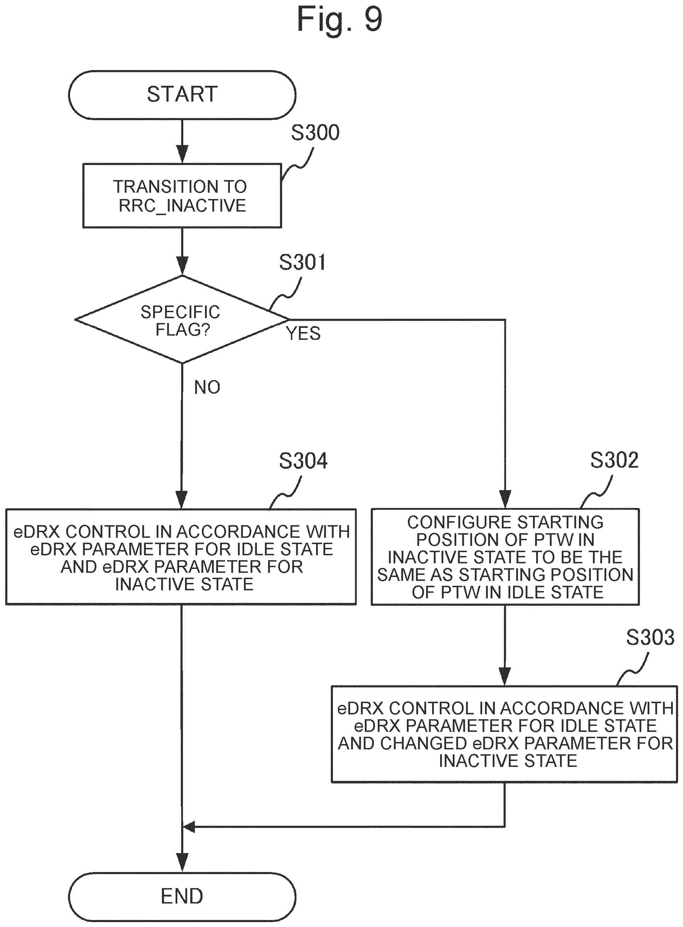

Fig. 9 is a flowchart to describe the eDRX operation in the inactive state. In the routine of Fig. 9, the eDRX parameter for the idle state is configured in the terminal 10.

In step S300, when the terminal 10 receives, from the base station 20, an RRC Release message including a suspend configuration (SuspendConfig) to instruct the terminal 10 to transition from the active state to the inactive state, the terminal 10 transitions to the inactive state. Here, the suspend configuration includes the eDRX parameter for the inactive state, and the terminal 10 configures the received eDRX parameter for the inactive state.

In step S301, the terminal 10 determines whether or not a "specific flag" is configured in the RRC Release message received in the routine of step S300. More specifically, the terminal 10 may determine whether or not the "specific flag" is present in the eDRX parameter for the inactive state, included in the RRC Release message received in the routine of step S300.

Here, the "specific flag" may be defined as an information element to, in a case where the PTW in the idle state and the PTW in the inactive state overlap with each other, instruct the terminal 10 to configure the starting position of either of the PTWs (or the PTW in the inactive state) to be the same as (aligned with) the starting position of the other one of the PTWs (or the PTW in the idle state). In a case where the specific flag is configured in the terminal 10, the routine advances to step S302, and in a case where the specific flag is not configured in the terminal 10, the routine advances to the routine of step S304.

In step S302, the terminal 10 configures the starting position of the PTW in the inactive state to be the same as the starting position of the PTW in the idle state, for the PH where the PTW in the idle state and the PTW in the inactive state overlap with each other. A concrete example of the specific flag and the routine in a case where the specific flag is present will be described later. Here, the PH where the PTW in the idle state and the PTW in the inactive state overlap with each other indicates, more specifically, any of the following cases: a case where the PH is an H-SFN corresponding to both the PH in the idle state and the PH in the inactive state (that is, an H-SFN where the eDRX cycle for the idle state is the same as the eDRX cycle for the inactive state), and in the H-SFN, the PTW in the inactive state is included in part of the PTW in the idle state (for example, the case corresponds to the example of Fig. 5); a case where part of the PTW in the idle state overlaps with part of the PTW in the inactive state; and a case where the PTW in the idle state is included in part of the PTW in the inactive state.

In step S303, the terminal 10 performs eDRX control in accordance with the eDRX parameter for the idle state and the eDRX parameter for the inactive state with the starting position of the PTW being configured to be the same as that of the idle state. That is, the terminal 10 monitors downlink control channel candidates in SFNs included in either one of "the starting position of the PTW in the idle state and the ending position of the PTW" and "the starting position of the PTW in the inactive state and the ending position of the PTW, the PTW being configured such that the starting position is made the same as that in the idle state."

In step S304, the terminal 10 does not configure the starting position of the PTW in the inactive state to be the same as the starting position of the PTW in the idle state, and the terminal 10 performs eDRX control in accordance with both the eDRX parameter for the idle state and the eDRX parameter for the inactive state. That is, in an H-SFN corresponding to the PH in the idle state, the terminal 10 monitors downlink control channel candidates in accordance with the starting position of the PTW in the idle state and the ending position of the PTW. Further, in an H-SFN corresponding to the PH in the inactive state, the terminal 10 monitors downlink control channel candidates in accordance with the starting position of the PTW in the inactive state and the ending position of the PTW. Further, in an H-SFN that does not correspond to either of the PH in the idle state and the PH in the inactive state, the terminal 10 does not monitor downlink control channel candidates.

<Process in Case where Specific Flag is Configured>

(Pattern 1)

In a pattern 1, it is premised that the PTW in the idle state and the PTW in the inactive state are calculated by use of Math. 1 to Math. 4.

In a case where a "specific flag" for the pattern 1 is configured in an RRC Release message, the terminal 10 calculates the starting position of the PTW in the inactive state by substituting the eDRX cycle included in the eDRX parameter for the idle state into "$T_{eDRX,H}$" in Math. 3, instead of the eDRX cycle included in the eDRX parameter for the inactive state. Further, in accordance with Math. 4, the ending position of the PTW in the inactive state is calculated by adding the time length of the PTW, included in the eDRX parameter for the inactive state, to the calculated starting position of the PTW.

The terminal 10 monitors downlink control channel candidates in an SFN where at least either of the PTW in the idle state and the PTW in the inactive state is configured, in accordance with the PTWs. For example, it is assumed that the starting position of the PTW in the idle state is SFN = 0 and the ending position of the PTW is SFN = 299 (that is, the time length of the PTW is three seconds). Further, it is assumed that the starting position of the PTW in the inactive state is SFN = 0 and the ending position of the PTW is SFN = 99 (that is, the time length of the PTW is one second). In this case, the terminal 10 monitors downlink control channel candidates in POs present from SFN = 0 to SFN = 299.

In the pattern 1, the "specific flag" may be expressed as "information indicating that the starting position of the PTW in the inactive state is the same as the starting position of the PTW in the idle state." The information may be an information element in an RRC message.

Hereby, the starting position of the PTW in the inactive state becomes the same as the starting position of the PTW in the idle state. Accordingly, in a case where the PH in the inactive state and the PH in the idle state overlap with each other, the terminal 10 can receive paging signals by starting the receiver circuit included in the terminal 10 just once.

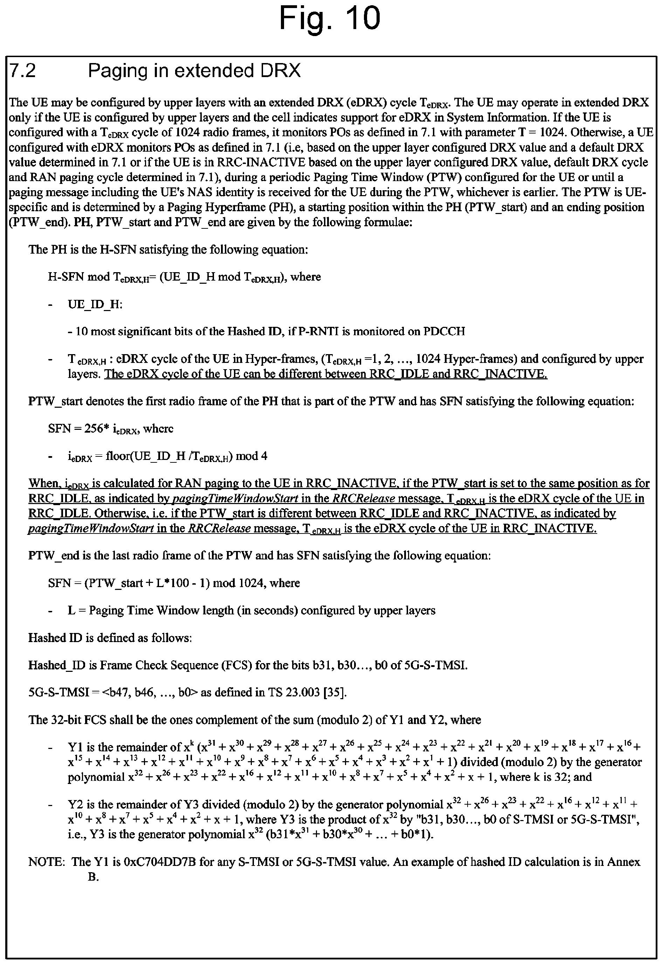

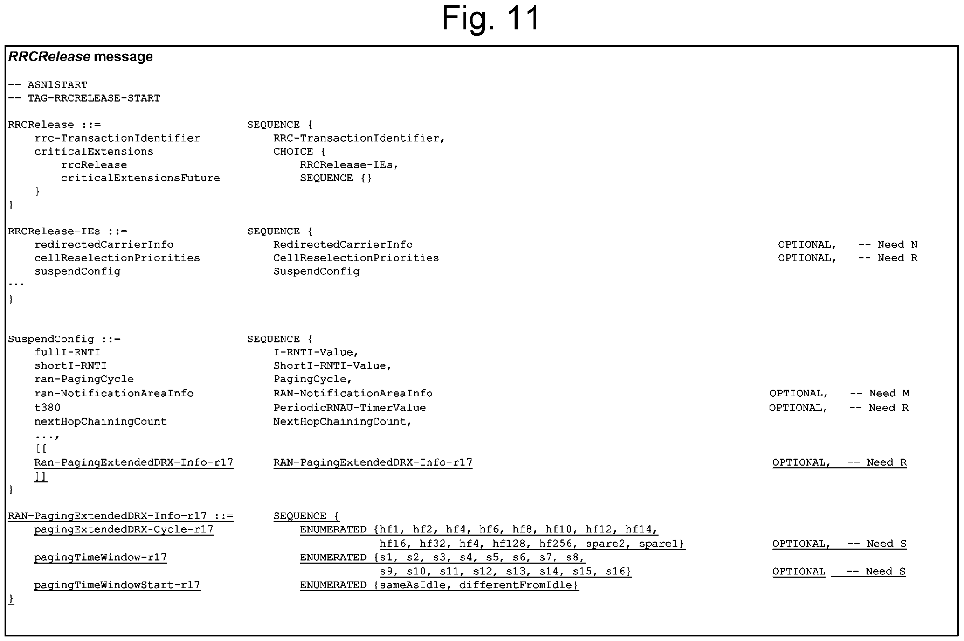

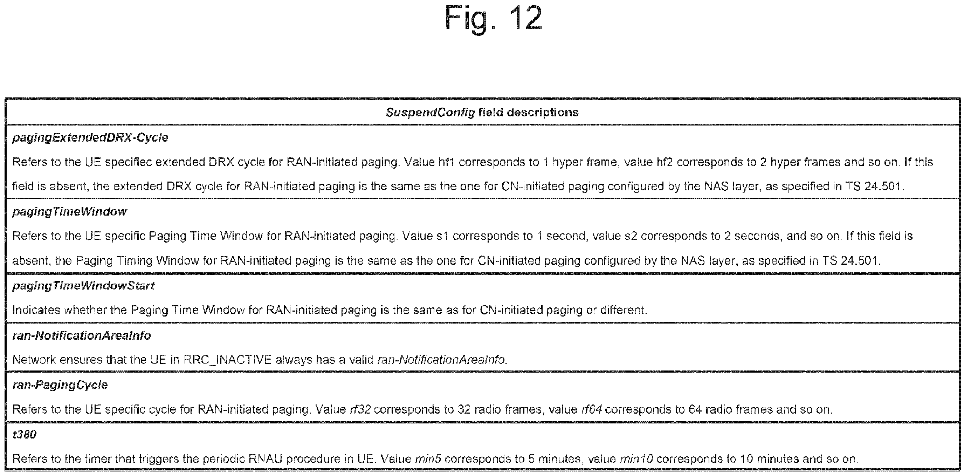

Fig. 10 illustrates a specification change example of TS38.304 in the pattern 1. Figs. 11 and 12 illustrate specification change examples of TS38.331 in the pattern 1. Here, "pagingTimeWindowStart-r17" illustrated in Fig. 11 may be expressed as "information indicating whether or not the starting position of the PTW in the inactive state is made the same as the starting position of the PTW in the idle state." Further, in Fig. 11, the "specific flag" may indicate that a parameter value corresponds to the information element "pagingTimeWindowStart-r17" configured in "sameAsIdle." Note that, in a case where the value of "pagingTimeWindowStart-r17" is configured to "differentFromIdle," the terminal 10 does not perform a process of changing the starting position of the PTW in the inactive state.

(Pattern 2)

In a pattern 2, it is premised that the PTW in the idle state is calculated by use of Math. 1 to Math. 4. Meanwhile, the PTW in the inactive state is calculated by use of Math. 5 described below, instead of Math. 2. That is, the PTW in the inactive state is calculated by use of Math. 1 and Math. 3 to Math. 5.

$$\text{(Math. 5)}$$

$$\text{SFN} = 256 * (\text{ieDRX for RRC\_IDLE} + \text{offset})$$

Here, ieDRX for RRC_IDLE is a value to be provided by substituting the eDRX cycle in the idle state into Math. 3. Further, offset is a value specified with the specific flag and may be any of 0 to 3, for example. Note that ieDRX in the idle state, calculated by Math. 3, may be any of values of 0 to 3. Note that, in a case where the SFN calculated by Math. 5 exceeds 1023, the terminal 10 may consider a value obtained by subtracting 1024 from the calculated value to be the SFN. For example, in a case where the calculation result of Math. 5 is 1536 ($256 \times 6$), the terminal 10 may consider the SFN to be 512 (1536 - 1024).

In the pattern 2, the case where the specific flag is configured may be a "case where information indicating that a starting position shifted by an offset value from the starting position of the PTW in the idle state is taken as the starting position of the PTW in the inactive state is configured in the terminal 10 and the offset value is configured to 0." The information may be an information element in an RRC message. For example, the information element may be called PagingTimeWindowOffset.

In a case where a "specific flag" for the pattern 2 is configured in an RRC Release message, the terminal 10 configures zero in offset of Math. 5. That is, the starting position of the PTW in the inactive state becomes the same as the starting position of the PTW in the idle state.

Like the pattern 1, the terminal 10 monitors downlink control channel candidates in an SFN where at least either of the PTW in the idle state and the PTW in the inactive state is configured, in accordance with the PTWs.

Hereby, the starting position of the PTW in the inactive state becomes the same as the starting position of the PTW in the idle state. Accordingly, in a case where the PH in the inactive state and the PH in the idle state overlap with each other, the terminal 10 can receive paging signals by starting the receiver circuit included in the terminal 10 just once.

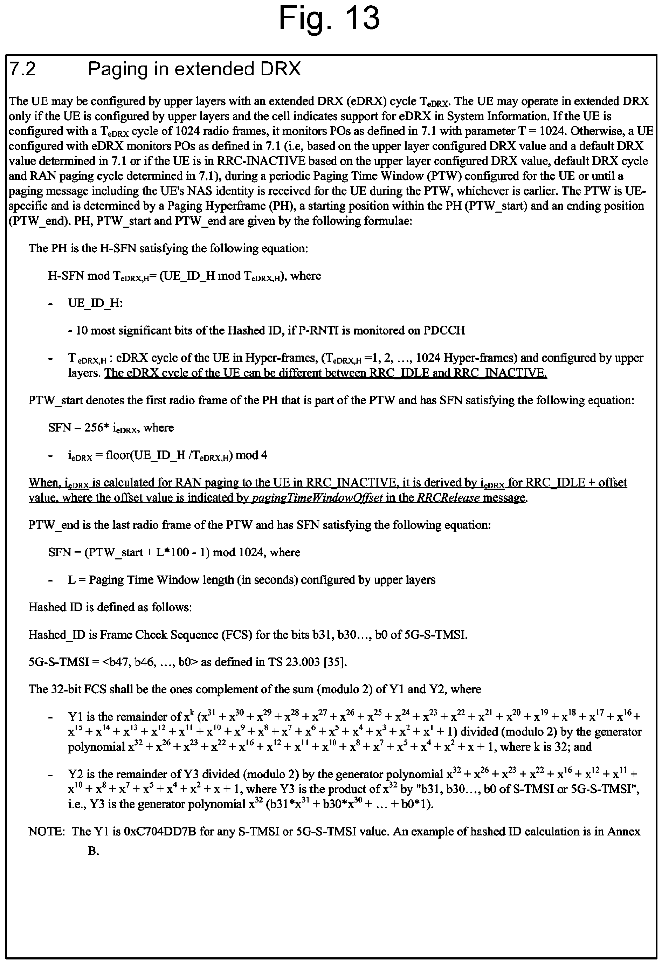

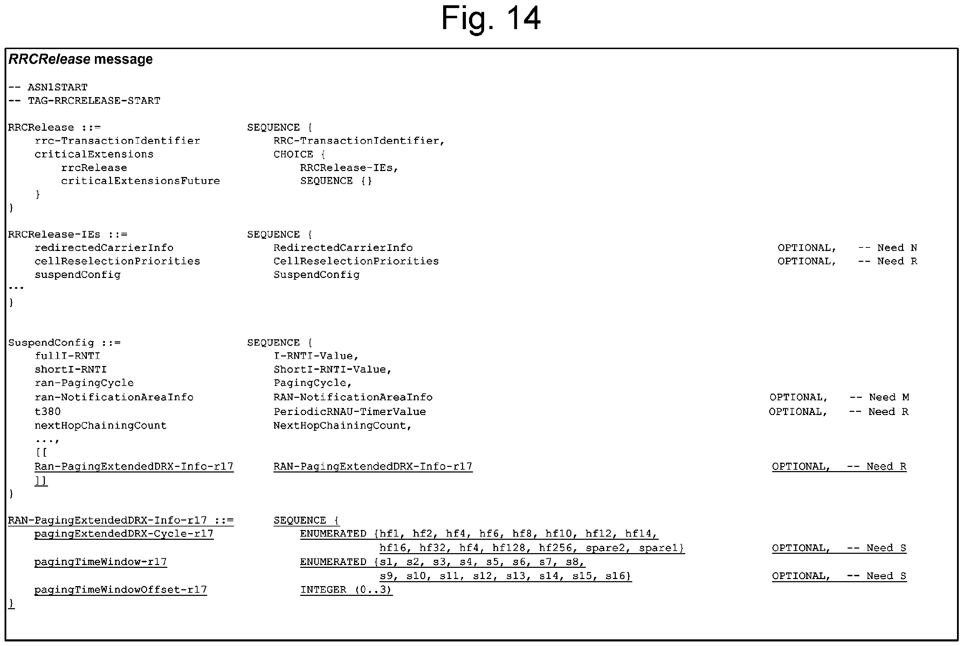

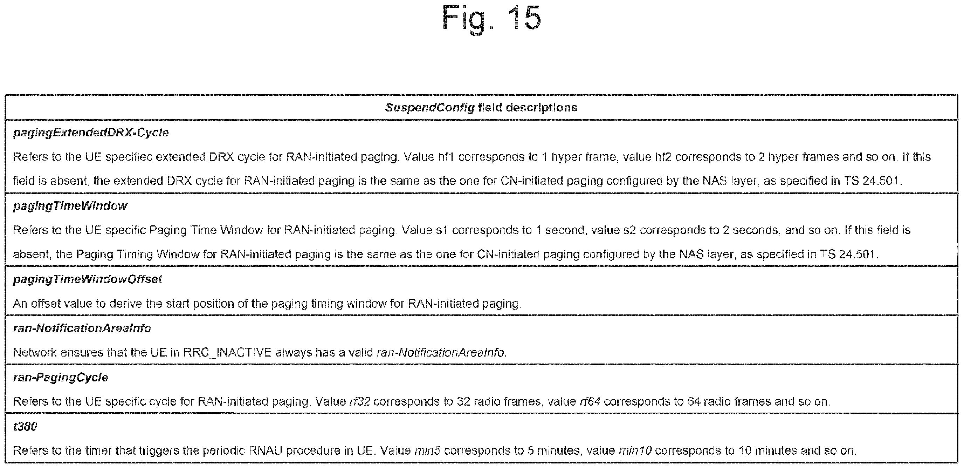

Fig. 13 illustrates a specification change example of TS38.304 in the pattern 2. Figs. 14 and 15 illustrate specification change examples of TS38.331 in the pattern 2. Here, "pagingTimeWindowOffset-r17" illustrated in Fig. 14 is information indicating that a starting position shifted by an offset value from the starting position of the PTW in the idle state is taken as the starting position of the PTW in the inactive state. In Fig. 14, the "specific flag" may correspond to an information element "pagingTimeWindowOffset-r17" with a parameter value configured to be "0."

<Modifications>

The eDRX parameter for the inactive state is not limited to the RRC Release message and may be configured in the terminal 10 by use of other messages. The other messages may be, for example, an RRCReconfiguration message, an RRCReestablishment message, an RRCResumeRequest/RRCResumeRequest1 message, an RRCResume message, an RRCSetup message, or broadcast information (system information, SIB1, SIB2, or the like).

The specific flag may be part of the eDRX parameter in the inactive state or may be defined as information separate from the eDRX parameter in the inactive state.

In a case where the specific flag is defined as information separate from the eDRX parameter for the inactive state, the eDRX parameter for the inactive state and the specific flag may be configured in the terminal 10 by use of different messages. For example, the eDRX parameter for the inactive state may be configured in the terminal 10 by use of an RRC Release message, and the specific flag may be configured in the terminal 10 by use of an RRCReconfiguration message, an RRCReestablishment message, an RRCResumeRequest message, an RRCResume message, an RRCSetup message, broadcast information (system information, SIB1, SIB2, or the like), or the like.

In the pattern 1, in a case where the specific flag is configured in the terminal 10, when the terminal 10 calculates the ending position of the PTW by Math. 4, the terminal 10 may calculate the ending position of the PTW in the inactive state by substituting the time length of the PTW in the idle state into Math. 4.

In the routine described in the pattern 1, instead of changing the eDRX parameter for the inactive state to the eDRX parameter for the idle state, the eDRX parameter for the idle state may be changed to the eDRX parameter for the inactive state. For example, in a case where the "specific flag" related to the pattern 1 is configured in an RRC Release message, the terminal 10 may substitute the eDRX cycle included in the eDRX parameter for the inactive state into "$T_{eDRX, H}$" in Math. 3, instead of the eDRX cycle included in the eDRX parameter for the idle state, to calculate the starting position of the PTW in the idle state. Further, in accordance with Math. 4, the ending position of the PTW in the idle state may be calculated by adding the time length of the PTW, included in the eDRX parameter for the idle state, to the calculated starting position of the PTW in the idle state. In this case, the "specific flag" may be defined as an information element to, in a case where the PTW in the idle state and the PTW in the inactive state overlap with each other, instruct the terminal 10 to configure the starting position of the PTW in the idle state to be the same as (aligned with) the starting position of the PTW in the inactive state.

In the routine described in the pattern 2, instead of calculating the eDRX parameter for the inactive state by adding an offset to the eDRX parameter for the idle state, the eDRX parameter for the idle state may be calculated by adding an offset to the eDRX parameter for the inactive state. For example, in a case where the "specific flag" related to the pattern 1 is configured in an RRC Release message, the terminal 10 may calculate the PTW in the inactive state by use of Math. 1 to Math. 4 and calculate the PTW in the idle state by use of Math. 1 and Math. 3 to Math. 5.

Regardless of whether there is a PH in which the PTW in the idle state and the PTW in the inactive state overlap with each other, the terminal 10 may configure the starting position of either of the PTWs to be the same as (aligned with) the starting position of the other one of the PTWs in all PHs. For example, the terminal 10 may configure the starting position of each PTW in the inactive state to be the same as the starting position of the PTW in the idle state. In this case, the terminal 10 may configure the starting position of the PTW in the inactive state to be the same as the starting position of the PTW in the idle state, for each PH corresponding to the inactive state, in the routine of step S302. In this case, the "specific flag" may indicate an information element to instruct the terminal 10 to configure the starting position of either of the PTWs to be the same as (aligned with) the starting position of the other one of the PTWs. Further, in a case where the PTW in the idle state and the PTW in the inactive state overlap with each other, the "specific flag" may be defined as an information element to instruct the terminal 10 to configure the starting position of the PTW in the inactive state (or in the idle state) to be the same as (aligned with) the starting position of the PTW in the idle state (or in the inactive state).

In the routine described in the pattern 1, the terminal 10 may further calculate the ending position of the PTW in the inactive state by adding the time length of the PTW, included in the eDRX parameter for the idle state, to the calculated starting position of the PTW, in accordance with Math. 4. That is, in addition to the eDRX cycle, the time length of the PTW may be also made the same as the eDRX parameter for the idle state. In other words, the terminal 10 may configure the starting position and the ending position of the PTW in the inactive state to be the same as the starting position and the ending position of the PTW in the idle state.

<Modifications of eDRX Parameter>

The terminal 10, the base station 20, and the core network 30 according to the present embodiment may flexibly configure the starting position of a PTW by including given information about the configuration of the starting position of the PTW in the eDRX parameter for the idle state and/or the eDRX parameter for the inactive state. For example, the given information about the configuration of the starting position of the PTW may include information indicative of the number of starting positions for the PTW in a PH (the number of SFNs that can be configured as starting SFNs for the PTW). Further, the starting position of a PTW may be determined by inputting the information indicative of the number of starting positions for the PTW in the PH into Math. 6 and Math. 7 instead of Math. 2 and Math. 3. Further, the ending position of the PTW may be determined in accordance with Math. 4.

$$\text{(Math. 6)}$$

$$SFN = (1024 \ div \ N_{PTW}) * ieDRX$$

$$\text{(Math. 7)}$$

$$ieDRX = floor(UE\_ID\_H/TeDRX,H) \ mod \ N_{PTW}$$

In Math. 6 and Math. 7, $N_{PTW}$ is information indicative of the number of starting positions for the PTW in the PH. For example, in a case of $N_{PTW} = 8$, since possible values of ieDRX are 0 to 7, the starting position of the PTW is any one of eight values of SFN = 0, 128, 256, 384, 512, 640, 768, 896. Note that, in a case of $N_{PTW} = 4$, Math. 6 and Math. 7 are the same as Math. 2 and Math. 3, respectively. In other words, the starting position of the PTW can be configured flexibly by utilizing Math. 6 and Math. 7.

In a case where the starting position of the PTW is determined in accordance with Math. 6 and Math. 7 and the ending position of the PTW is determined by Math. 4, the eDRX parameter includes an eDRX cycle (TeDRX,H in Math. 7), the time length of the PTW (L in Math. 4), and the number of starting positions for the PTW in the PH ($N_{PTW}$ in Math. 6) are included in the eDRX parameter.

Further, in the wireless communication system 1 according to the present embodiment, the given information on the configuration of the starting position of the PTW may also include information for specifying a radio frame indicative of the starting position of the PTW. For example, the information for specifying a radio frame indicative of the starting position of the PTW may be information for specifying a specific radio frame number such as SFN = 0 or SFN = 64. Further, the eDRX parameter may include information for specifying a radio frame indicative of the ending position of the PTW (for example, SFN = 64, SFN = 128, or the like). Thus, the ending position of the PTW can be configured flexibly. In this case, in the eDRX parameter, information for specifying an eDRX cycle and a radio frame indicative of the starting position of a PTW, and information for specifying a radio frame indicative of the ending position of the PTW are included.

<Hardware Configuration>

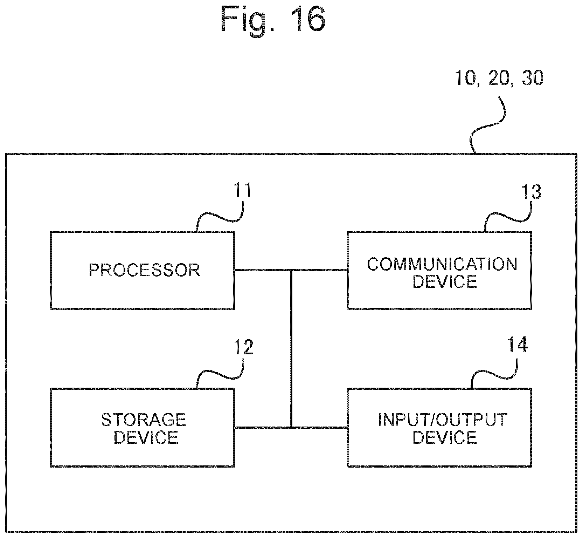

Fig. 16 is a diagram illustrating an example of the hardware configuration of each equipment in the wireless communication system. Each equipment in the wireless communication system 1 (for example, the terminal 10, the base station 20, or the core network 30) includes a processor 11, a storage device 12, a communication device 13 for performing wired or wireless communication, and an input/output device 14 for accepting various input operations and outputting various information.

The processor 11 is, for example, a CPU (Central Processing Unit) to control each equipment in the wireless communication system 1. The processor 11 may read a program from the storage device 12 and execute the program to perform various processing to be described in the present embodiment. Each equipment in the wireless communication system 1 may also be configured to include one or more processors 11. Further, each equipment concerned may also be called a computer.

The storage device 12 is constituted by, for example, storages such as a memory, an HDD (Hard Disk Drive), and/or an SSD (Solid State Drive). The storage device 12 may also store various information required to perform processing by the processor 11 (for example, programs and the like executed by the processor 11).

The communication device 13 is a device for performing communication through wired and/or wireless networks and may include a network card, a communication module, a chip, an antenna, and the like, for example. Further, an amplifier, an RF (Radio Frequency) device for performing processing on radio signals, and a BB (Base Band) device for performing processing on baseband signals may be included in the communication device 13.

The RF device performs D/A conversion, modulation, frequency conversion, power amplification, and the like on a digital baseband signal, for example, received from the BB device to generate a radio signal to be transmitted from the antenna. Further, the RF device performs frequency conversion, demodulation, A/D conversion, and the like on a radio signal received from the antenna to generate and transmit a digital baseband signal to the BB device. The BB device performs processing for converting the digital baseband signal to a packet and processing for converting the packet to a digital baseband signal.

The input/output device 14 includes input devices such as a keyboard, a touch panel, a mouse, and/or a microphone, and output devices such as a display and/or a speaker, for example.

Note that the hardware configuration described above is just an example. In each equipment inside the wireless communication system 1, part of the hardware illustrated in Fig. 16 may be omitted, or any other hardware unillustrated in Fig. 16 may be included. Further, the hardware illustrated in Fig. 16 may be constituted by one or more chips.

<Functional Configuration>

(Terminal)

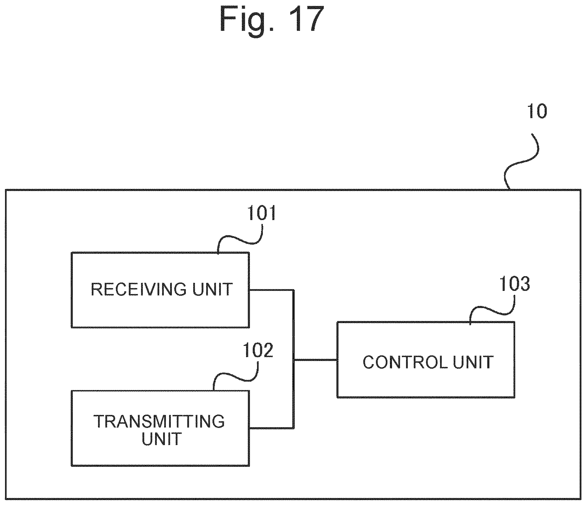

Fig. 17 is a diagram illustrating an example of the functional configuration of the terminal 10. The terminal 10 includes a receiving unit 101, a transmitting unit 102, and a control unit 103. All or some of the functions implemented by the receiving unit 101 and the transmitting unit 102 can be realized by using the communication device 13. Further, all or some of the functions implemented by the receiving unit 101 and the transmitting unit 102, and the control unit 103 can be achieved by the processor 11 executing a program stored in the storage device 12. Further, the program can be stored in a storage medium. The storage medium with the program stored thereon may be a non-transitory computer readable medium. The non-transitory medium is not limited particularly but may be a storage medium such as a USB memory or a CD-ROM, for example.

The eDRX parameters and the specific flag used in the above description are examples of an eDRX configuration and given information in the following description, respectively.

The receiving unit 101 receives downlink signals. Further, the receiving unit 101 may also receive information and/or data transmitted through each downlink signal. Here, for example, the verb "receive" may also include the meaning of performing processing related to reception including at least one of the reception, demapping, demodulation, decoding, monitoring, and measurement of a radio signal.

Further, the receiving unit 101 receives an eDRX configuration (hereinafter referred to as a "first eDRX configuration") for the idle state and an eDRX configuration (hereinafter referred to as a "second eDRX configuration") for the inactive state. The receiving unit 101 may receive an NAS message including the first eDRX configuration from the core network 30. Further, the receiving unit 101 may receive an RRC message or broadcast information including the second eDRX configuration from the base station 20. The RRC message may be, for example, an RRC Release message an RRCReconfiguration message, an RRCReestablishment message, an RRCResumeRequest message, an RRCResume message, an RRCSetup message, or the like. Further, the receiving unit 101 may receive an NAS message including the second eDRX configuration from the core network 30.

The transmitting unit 102 transmits uplink signals. Further, the transmitting unit 102 may also transmit information and/or data to be transmitted through each uplink signal. Here, for example, the verb "transmit" may also include the meaning of performing processing related to transmission including at least one of encoding, modulation, mapping, and transmission of a radio signal.

The control unit 103 performs various processing related to eDRX based on the eDRX configuration received at the receiving unit 101. Further, in the idle state, the control unit 103 performs control to monitor control channel candidates (PDCCH Candidates) in a paging search space during a PTW (reception period) in a PH (given H-SFN) indicated by the first eDRX configuration. Further, in the inactive state, the control unit 103 performs control to monitor control channel candidates (PDCCH Candidates) in a paging search space during a PTW (reception period) in a PH (given H-SFN) indicated by the second eDRX configuration.

Further, the control unit 103 configures at least part of configuration information of the second eDRX configuration to be the same as configuration information of the first eDRX configuration and performs eDRX control in the inactive state in accordance with the second eDRX configuration with the configuration information at least part of which is configured to be the same as the configuration information of the first eDRX configuration. The at least part of the configuration information of the second eDRX configuration may be the eDRX cycle of the eDRX configuration in the inactive state. The "second eDRX configuration with the configuration information at least part of which is configured to be the same as the configuration information of the first eDRX configuration" may be called a "third eDRX configuration" for convenience to distinguish it from the second eDRX configuration received by the receiving unit 101.

Further, the control unit 103 may configure the configuration information of the second eDRX configuration to be the same as the configuration information of the first eDRX configuration and perform eDRX control in the inactive state in accordance with the second eDRX configuration with the configuration information configured to be the same as the configuration information of the first eDRX configuration. The configuration information of the second eDRX configuration may be the eDRX cycle and the time length of a PTW of the eDRX configuration in the inactive state (corresponding to the modification).

Further, in a case where given information is included in the second eDRX configuration, the control unit 103 may configure at least part of the configuration information of the second eDRX configuration to be the same as the configuration information of the first eDRX configuration (corresponding to S302-YES, S303 in Fig. 9). Here, the given information may be the specific flags in the pattern 1 and the pattern 2. For example, in the pattern 1, and the given information may be "pagingTimeWindowStart-r17" with a parameter value configured to be True, or in the pattern 2, and the given information may be "pagingTimeWindowOffset-r17" with a parameter value (offset) configured to be zero.

Further, in a case where the given information is not included in the second eDRX configuration, the control unit 103 may perform eDRX control in the RRC inactive state in accordance with the second eDRX configuration without configuring at least part of the configuration information of the second eDRX configuration to be the same as the configuration information of the first eDRX configuration (corresponding to S305 in Fig. 9).

Further, in a case where a PTW (a first reception period) for monitoring control channel candidates, indicated by the first eDRX configuration, and a PTW (a second reception period) for monitoring control channel candidates, indicated by the second eDRX configuration, overlap with each other, the control unit 103 may perform eDRX control in the RRC inactive state in accordance with the "second eDRX configuration with the configuration information at least part of which is configured to be the same as the configuration information of the first eDRX configuration."

Further, in a case where the PTW (the first reception period) for monitoring control channel candidates, indicated by the first eDRX configuration, and the PTW (the second reception period) for monitoring control channel candidates, indicated by the second eDRX configuration, do not overlap with each other, the control unit 103 may perform eDRX control in the RRC inactive state in accordance with the second eDRX configuration configured in the terminal 10 (that is, without configuring at least part of the configuration information of the second eDRX configuration to be the same as the configuration information of the first eDRX configuration).

Further, the at least part of the configuration information of the second eDRX configuration may be an eDRX cycle (information used to calculate the starting position of the second reception period), and the configuration information of the first eDRX configuration may be an eDRX cycle (information used to calculate the starting position of the first reception period).

Further, the control unit 103 may change (or replace) the eDRX cycle in the second eDRX configuration to (or with) the eDRX cycle in the first eDRX configuration. Further, the "second eDRX configuration with the configuration information at least part of which is configured to be the same as the configuration information of the first eDRX configuration" may be expressed as a "changed second eDRX configuration" (corresponding to the pattern 1).

Further, the control unit 103 may determine the eDRX cycle in the second eDRX configuration by adding an offset value included in the second eDRX configuration to the eDRX cycle in the first eDRX configuration. Further, the offset value may be zero (corresponding to the pattern 2).

<Supplement>

The eDRX may be called discontinuous reception, extended discontinuous reception, reception spacing control, extended reception spacing control, or the like.

The wording "monitor control channel candidates in a paging search space" may also be expressed as the wording "monitor control channel candidates in a search space set configured by paging search space information (pagingSearchSpace)."

In the aforementioned embodiment, an example of a first time unit may be one hyperframe (10.24 sec), an example of a second time unit may be one radio frame (10 ms), and an example of a third time unit may be one subframe (1 ms). Further, it may be defined that the second time unit is shorter in time than the first time unit, and the third time unit is shorter in time than the second time unit. Further, an example of a number indicative of each position of the second time unit cyclically repeated may be an SFN, and an example of a number indicative of each position of the first time unit cyclically repeated may be an H-SFN. For example, the H-SFN may also be expressed as a first time interval of a position indicated by a given number among cyclically repeated first time intervals. Further, the PH may be configured in a plurality of hyperframes among H-SFNs of 0 to 1023.

Various signals, information, and parameters in the aforementioned embodiment may be signaled in any layer.

In other words, the various signals, information, and parameters mentioned above may also be replaced with signals, information, and parameters in any layer such as the higher layer (for example, NAS layer, RRC layer, MAC layer, or the like), the lower layer (for example, physical layer), or the like. Further, given information is not limited to be explicitly informed and may also be implicitly informed (for example, by not informing the information or using any other information).

Further, the names of various signals, information, parameters, IE, channels, time units, and frequency units are just illustrative examples in the aforementioned embodiment, and the names may be replaced with other names. For example, each slot may be any other name as long as it is a time unit having a given number of symbols. Further, RB may be any other name as long as it is a frequency unit having a given number of subcarriers.

Further, the applications of the terminal 10 in the aforementioned embodiment (for example, for RedCap, IoT, and the like) are not limited to those described herein, and the terminal 10 may also be used for any other purpose (for example, for eMBB, URLLC, Device-to-Device (D2D), Vehicle-to-Everything (V2X), or the like) as long as it has similar functions.

Further, the format of various information is not limited to that in the aforementioned embodiment, and it may be changed accordingly such as to bit representation (0 or 1), Boolean (true or false), integer values, or characters. Further, the singular and the plural in the aforementioned embodiment may be mutually changed.

The above description has dealt with the present embodiment with reference to concrete examples. However, this disclosure is not limited to these concrete examples. Embodiments obtained by adding design changes to the concrete examples by a person skilled in the art appropriately are also included in the scope of this disclosure, as long as the embodiments have the features of this disclosure. Each element provided in each of the concrete examples and its arrangement, condition, shape, and the like are not limited to those described herein and can be changed appropriately. Combinations of the elements included in each of the concrete examples can be changed appropriately, provided that they do not cause any technical inconsistency.

**Claims**

1. A terminal comprising:

   a receiving unit which receives a discontinuous reception parameter for an RRC idle state and a discontinuous reception parameter for an RRC inactive state; and
   a control unit which controls a discontinuous reception operation in the RRC inactive state in accordance with the discontinuous reception parameter for the RRC idle state instead of the discontinuous reception parameter for the RRC inactive state.

2. The terminal according to claim 1, wherein:

   the receiving unit receives system information; and
   in a case where information is configured by use of the system information, the control unit controls the discontinuous reception operation in the RRC inactive state in accordance with the discontinuous reception parameter for the RRC idle state.

3. The terminal according to claim 1 or 2, wherein the discontinuous reception operation includes monitoring of a physical downlink control channel candidate in a paging occasion.

4. The terminal according to any one of claims 1 to 3, wherein the receiving unit receives an NAS message including the discontinuous reception parameter for the RRC idle state and receives an RRC Release message including the discontinuous reception parameter for the RRC inactive state.

5. A wireless communication method for a terminal, the wireless communication method comprising:

   a step of receiving a discontinuous reception parameter for an RRC idle state and a discontinuous reception parameter for an RRC inactive state; and
   a step of controlling a discontinuous reception operation in the RRC inactive state in accordance with the discontinuous reception parameter for the RRC idle state instead of the discontinuous reception parameter for the RRC inactive state.

# Fig. 1

EP 4 354 975 A1

# Fig. 2

EP 4 354 975 A1

```
        ┌─────────────────────────────────┐
        │                                 │
        │         CONNECTED STATE         │
        │                                 │
        └─────────────────────────────────┘
           ↑      │                  ↑    │
     RESUME │     │ SUSPEND          │    │
           │      ↓                  │    │
        ┌─────────────────┐   ESTABLISH  RELEASE
        │                 │          │    │
        │  INACTIVE STATE │          │    │
        │                 │          │    │
        └─────────────────┘          │    │
           │                         │    │
     RELEASE │                       │    │
           │                         │    │
           ↓                         │    ↓
        ┌─────────────────────────────────┐
        │                                 │
        │           IDLE STATE            │
        │                                 │
        └─────────────────────────────────┘
```

15

Fig. 3

Fig. 4

# Fig. 5

**eDRX for RRC INACTIVE (eDRX cyle = 2H-SFN)**

| H-SFN 0 | H-SFN 1 | H-SFN 2 | H-SFN 3 | H-SFN 4 | H-SFN 5 | H-SFN 6 | H-SFN 7 | H-SFN 8 | H-SFN 9 | H-SFN 10 | H-SFN 11 |
|---|---|---|---|---|---|---|---|---|---|---|---|

| SFN 0 | SFN 1 | ... | ... | SFN 1023 |
|---|---|---|---|---|

← PTW →

**eDRX for RRC IDLE (eDRX cyle = 3H-SFN)**

| H-SFN 0 | H-SFN 1 | H-SFN 2 | H-SFN 3 | H-SFN 4 | H-SFN 5 | H-SFN 6 | H-SFN 7 | H-SFN 8 | H-SFN 9 | H-SFN 10 | H-SFN 11 |
|---|---|---|---|---|---|---|---|---|---|---|---|

| SFN 0 | SFN 1 | ... | ... | SFN 1023 |
|---|---|---|---|---|

← PTW →

EP 4 354 975 A1

# Fig. 6

**eDRX for RRC INACTIVE (eDRX cyle = 2H-SFN)**

| H-SFN 0 | H-SFN 1 | H-SFN 2 | H-SFN 3 | H-SFN 4 | H-SFN 5 | H-SFN 6 | H-SFN 7 | H-SFN 8 | H-SFN 9 | H-SFN 10 | H-SFN 11 |

| SFN 0 | SFN 1 | ... | ... | SFN 1023 |

PTW

**eDRX for RRC IDLE (eDRX cyle = 3H-SFN)**

| H-SFN 0 | H-SFN 1 | H-SFN 2 | H-SFN 3 | H-SFN 4 | H-SFN 5 | H-SFN 6 | H-SFN 7 | H-SFN 8 | H-SFN 9 | H-SFN 10 | H-SFN 11 |

| SFN 0 | SFN 1 | ... | ... | SFN 1023 |

PTW

# Fig. 7

# Fig. 8

# Fig. 9

```
                    START

                      │
                      ▼              S300
           ┌──────────────────────┐
           │   TRANSITION TO       │
           │   RRC_INACTIVE        │
           └──────────────────────┘
                      │
                      ▼              S301
                  ╱────────╲
                 ╱ SPECIFIC ╲        YES
                ╲  FLAG?     ╱──────────────────┐
                 ╲──────────╱                   │
                      │                         │
                      │ NO                      │
                      │                         │
          S304        │                    S302 │
  ┌──────────────────────────┐     ┌──────────────────────────┐
  │ eDRX CONTROL IN ACCORDANCE│     │  CONFIGURE STARTING       │
  │ WITH eDRX PARAMETER FOR   │     │  POSITION OF PTW IN       │
  │ IDLE STATE AND eDRX       │     │  INACTIVE STATE TO BE THE  │
  │ PARAMETER FOR INACTIVE     │     │  SAME AS STARTING POSITION │
  │ STATE                      │     │  OF PTW IN IDLE STATE      │
  └──────────────────────────┘     └──────────────────────────┘
                      │                         │
                      │                         ▼            S303
                      │              ┌──────────────────────────┐
                      │              │ eDRX CONTROL IN ACCORDANCE │
                      │              │ WITH eDRX PARAMETER FOR    │
                      │              │ IDLE STATE AND CHANGED     │
                      │              │ eDRX PARAMETER FOR         │
                      │              │ INACTIVE STATE             │
                      │              └──────────────────────────┘
                      │                         │
                      ◄─────────────────────────┘
                      │
                      ▼
                    END
```

# Fig. 10

## 7.2    Paging in extended DRX

The UE may be configured by upper layers with an extended DRX (eDRX) cycle $T_{eDRX}$. The UE may operate in extended DRX only if the UE is configured by upper layers and the cell indicates support for eDRX in System Information. If the UE is configured with a $T_{eDRX}$ cycle of 1024 radio frames, it monitors POs as defined in 7.1 with parameter T = 1024. Otherwise, a UE configured with eDRX monitors POs as defined in 7.1 (i.e, based on the upper layer configured DRX value and a default DRX value determined in 7.1 or if the UE is in RRC-INACTIVE based on the upper layer configured DRX value, default DRX cycle and RAN paging cycle determined in 7.1), during a periodic Paging Time Window (PTW) configured for the UE or until a paging message including the UE's NAS identity is received for the UE during the PTW, whichever is earlier. The PTW is UE-specific and is determined by a Paging Hyperframe (PH), a starting position within the PH (PTW_start) and an ending position (PTW_end). PH, PTW_start and PTW_end are given by the following formulae:

The PH is the H-SFN satisfying the following equation:

H-SFN mod $T_{eDRX,H}$= (UE_ID_H mod $T_{eDRX,H}$), where

- UE_ID_H:

  - 10 most significant bits of the Hashed ID, if P-RNTI is monitored on PDCCH

- $T_{eDRX,H}$ : eDRX cycle of the UE in Hyper-frames, ($T_{eDRX,H}$ =1, 2, ..., 1024 Hyper-frames) and configured by upper layers. The eDRX cycle of the UE can be different between RRC_IDLE and RRC_INACTIVE.

PTW_start denotes the first radio frame of the PH that is part of the PTW and has SFN satisfying the following equation:

SFN = 256* $i_{eDRX}$, where

- $i_{eDRX}$ = floor(UE_ID_H /$T_{eDRX,H}$) mod 4

When, $i_{eDRX}$ is calculated for RAN paging to the UE in RRC_INACTIVE, if the PTW_start is set to the same position as for RRC_IDLE, as indicated by *pagingTimeWindowStart* in the *RRCRelease* message, $T_{eDRX,H}$ is the eDRX cycle of the UE in RRC_IDLE. Otherwise, i.e. if the PTW_start is different between RRC_IDLE and RRC_INACTIVE, as indicated by *pagingTimeWindowStart* in the *RRCRelease* message, $T_{eDRX,H}$ is the eDRX cycle of the UE in RRC_INACTIVE.

PTW_end is the last radio frame of the PTW and has SFN satisfying the following equation:

SFN = (PTW_start + L*100 - 1) mod 1024, where

- L = Paging Time Window length (in seconds) configured by upper layers

Hashed ID is defined as follows:

Hashed_ID is Frame Check Sequence (FCS) for the bits b31, b30..., b0 of 5G-S-TMSI.

5G-S-TMSI = <b47, b46, ..., b0> as defined in TS 23.003 [35].

The 32-bit FCS shall be the ones complement of the sum (modulo 2) of Y1 and Y2, where

- Y1 is the remainder of $x^k$ $(x^{31} + x^{30} + x^{29} + x^{28} + x^{27} + x^{26} + x^{25} + x^{24} + x^{23} + x^{22} + x^{21} + x^{20} + x^{19} + x^{18} + x^{17} + x^{16} + x^{15} + x^{14} + x^{13} + x^{12} + x^{11} + x^{10} + x^9 + x^8 + x^7 + x^6 + x^5 + x^4 + x^3 + x^2 + x^1 + 1)$ divided (modulo 2) by the generator polynomial $x^{32} + x^{26} + x^{23} + x^{22} + x^{16} + x^{12} + x^{11} + x^{10} + x^8 + x^7 + x^5 + x^4 + x^2 + x + 1$, where k is 32; and

- Y2 is the remainder of Y3 divided (modulo 2) by the generator polynomial $x^{32} + x^{26} + x^{23} + x^{22} + x^{16} + x^{12} + x^{11} + x^{10} + x^8 + x^7 + x^5 + x^4 + x^2 + x + 1$, where Y3 is the product of $x^{32}$ by "b31, b30..., b0 of S-TMSI or 5G-S-TMSI", i.e., Y3 is the generator polynomial $x^{32}$ $(b31*x^{31} + b30*x^{30} + ... + b0*1)$.

NOTE:    The Y1 is 0xC704DD7B for any S-TMSI or 5G-S-TMSI value. An example of hashed ID calculation is in Annex B.

# Fig. 11

```
RRCRelease message

-- ASN1START
-- TAG-RRCRELEASE-START

RRCRelease ::=                    SEQUENCE {
    rrc-TransactionIdentifier         RRC-TransactionIdentifier,
    criticalExtensions                CHOICE {
        rrcRelease                        RRCRelease-IEs,
        criticalExtensionsFuture          SEQUENCE {}
    }
}

RRCRelease-IEs ::=                SEQUENCE {
    redirectedCarrierInfo             RedirectedCarrierInfo              OPTIONAL,    -- Need N
    cellReselectionPriorities         CellReselectionPriorities         OPTIONAL,    -- Need R
    suspendConfig                     SuspendConfig
...
}


SuspendConfig ::=                 SEQUENCE {
    fullI-RNTI                        I-RNTI-Value,
    shortI-RNTI                       ShortI-RNTI-Value,
    ran-PagingCycle                   PagingCycle,
    ran-NotificationAreaInfo          RAN-NotificationAreaInfo          OPTIONAL,    -- Need M
    t380                              PeriodicRNAU-TimerValue           OPTIONAL,    -- Need R
    nextHopChainingCount              NextHopChainingCount,
    ...,
    [[
    Ran-PagingExtendedDRX-Info-r17    RAN-PagingExtendedDRX-Info-r17    OPTIONAL,    -- Need R
    ]]
}

RAN-PagingExtendedDRX-Info-r17 ::=    SEQUENCE {
    pagingExtendedDRX-Cycle-r17           ENUMERATED {hf1, hf2, hf4, hf6, hf8, hf10, hf12, hf14,
                                              hf16, hf32, hf4, hf128, hf256, spare2, spare1}   OPTIONAL,    -- Need S
    pagingTimeWindow-r17                  ENUMERATED {s1, s2, s3, s4, s5, s6, s7, s8,
                                              s9, s10, s11, s12, s13, s14, s15, s16}   OPTIONAL    -- Need S
    pagingTimeWindowStart-r17             ENUMERATED {sameAsIdle, differentFromIdle}
}
```

# Fig. 12

| SuspendConfig field descriptions |
| --- |
| **pagingExtendedDRX-Cycle**<br><br>Refers to the UE specifiec extended DRX cycle for RAN-initiated paging. Value hf1 corresponds to 1 hyper frame, value hf2 corresponds to 2 hyper frames and so on. If this field is absent, the extended DRX cycle for RAN-initiated paging is the same as the one for CN-initiated paging configured by the NAS layer, as specified in TS 24.501. |
| **pagingTimeWindow**<br><br>Refers to the UE specific Paging Time Window for RAN-initiated paging. Value s1 corresponds to 1 second, value s2 corresponds to 2 seconds, and so on. If this field is absent, the Paging Timing Window for RAN-initiated paging is the same as the one for CN-initiated paging configured by the NAS layer, as specified in TS 24.501. |
| **pagingTimeWindowStart**<br><br>Indicates whether the Paging Time Window for RAN-initiated paging is the same as for CN-initiated paging or different. |
| **ran-NotificationAreaInfo**<br><br>Network ensures that the UE in RRC_INACTIVE always has a valid ran-NotificationAreaInfo. |
| **ran-PagingCycle**<br><br>Refers to the UE specific cycle for RAN-initiated paging. Value rf32 corresponds to 32 radio frames, value rf64 corresponds to 64 radio frames and so on. |
| **t380**<br><br>Refers to the timer that triggers the periodic RNAU procedure in UE. Value min5 corresponds to 5 minutes, value min10 corresponds to 10 minutes and so on. |

# Fig. 13

## 7.2 Paging in extended DRX

The UE may be configured by upper layers with an extended DRX (eDRX) cycle $T_{eDRX}$. The UE may operate in extended DRX only if the UE is configured by upper layers and the cell indicates support for eDRX in System Information. If the UE is configured with a $T_{eDRX}$ cycle of 1024 radio frames, it monitors POs as defined in 7.1 with parameter T = 1024. Otherwise, a UE configured with eDRX monitors POs as defined in 7.1 (i.e, based on the upper layer configured DRX value and a default DRX value determined in 7.1 or if the UE is in RRC-INACTIVE based on the upper layer configured DRX value, default DRX cycle and RAN paging cycle determined in 7.1), during a periodic Paging Time Window (PTW) configured for the UE or until a paging message including the UE's NAS identity is received for the UE during the PTW, whichever is earlier. The PTW is UE-specific and is determined by a Paging Hyperframe (PH), a starting position within the PH (PTW_start) and an ending position (PTW_end). PH, PTW_start and PTW_end are given by the following formulae:

The PH is the H-SFN satisfying the following equation:

$$\text{H-SFN mod } T_{eDRX,H} = (\text{UE\_ID\_H mod } T_{eDRX,H}), \text{ where}$$

- UE_ID_H:

  - 10 most significant bits of the Hashed ID, if P-RNTI is monitored on PDCCH

- $T_{eDRX,H}$ : eDRX cycle of the UE in Hyper-frames, ($T_{eDRX,H}$ =1, 2, ..., 1024 Hyper-frames) and configured by upper layers. The eDRX cycle of the UE can be different between RRC_IDLE and RRC_INACTIVE.

PTW_start denotes the first radio frame of the PH that is part of the PTW and has SFN satisfying the following equation:

$$\text{SFN} - 256* \, i_{eDRX}, \text{ where}$$

- $i_{eDRX} = \text{floor}(\text{UE\_ID\_H} / T_{eDRX,H}) \bmod 4$

When, $i_{eDRX}$ is calculated for RAN paging to the UE in RRC_INACTIVE, it is derived by $i_{eDRX}$ for RRC_IDLE + offset value, where the offset value is indicated by *pagingTimeWindowOffset* in the *RRCRelease* message.

PTW_end is the last radio frame of the PTW and has SFN satisfying the following equation:

$$\text{SFN} = (\text{PTW\_start} + L*100 - 1) \bmod 1024, \text{ where}$$

- L = Paging Time Window length (in seconds) configured by upper layers

Hashed ID is defined as follows:

Hashed_ID is Frame Check Sequence (FCS) for the bits b31, b30..., b0 of 5G-S-TMSI.

5G-S-TMSI = <b47, b46, ..., b0> as defined in TS 23.003 [35].

The 32-bit FCS shall be the ones complement of the sum (modulo 2) of Y1 and Y2, where

- Y1 is the remainder of $x^k$ $(x^{31} + x^{30} + x^{29} + x^{28} + x^{27} + x^{26} + x^{25} + x^{24} + x^{23} + x^{22} + x^{21} + x^{20} + x^{19} + x^{18} + x^{17} + x^{16} + x^{15} + x^{14} + x^{13} + x^{12} + x^{11} + x^{10} + x^9 + x^8 + x^7 + x^6 + x^5 + x^4 + x^3 + x^2 + x^1 + 1)$ divided (modulo 2) by the generator polynomial $x^{32} + x^{26} + x^{23} + x^{22} + x^{16} + x^{12} + x^{11} + x^{10} + x^8 + x^7 + x^5 + x^4 + x^2 + x + 1$, where k is 32; and

- Y2 is the remainder of Y3 divided (modulo 2) by the generator polynomial $x^{32} + x^{26} + x^{23} + x^{22} + x^{16} + x^{12} + x^{11} + x^{10} + x^8 + x^7 + x^5 + x^4 + x^2 + x + 1$, where Y3 is the product of $x^{32}$ by "b31, b30..., b0 of S-TMSI or 5G-S-TMSI", i.e., Y3 is the generator polynomial $x^{32}$ (b31*$x^{31}$ + b30*$x^{30}$ + ... + b0*1).

NOTE: The Y1 is 0xC704DD7B for any S-TMSI or 5G-S-TMSI value. An example of hashed ID calculation is in Annex B.

## Fig. 14

```
RRCRelease message

-- ASN1START
-- TAG-RRCRELEASE-START

RRCRelease ::=                      SEQUENCE {
    rrc-TransactionIdentifier           RRC-TransactionIdentifier,
    criticalExtensions                  CHOICE {
        rrcRelease                          RRCRelease-IEs,
        criticalExtensionsFuture            SEQUENCE {}
    }
}

RRCRelease-IEs ::=                  SEQUENCE {
    redirectedCarrierInfo               RedirectedCarrierInfo                       OPTIONAL,    -- Need N
    cellReselectionPriorities           CellReselectionPriorities                   OPTIONAL,    -- Need R
    suspendConfig                       SuspendConfig
...
}


SuspendConfig ::=                   SEQUENCE {
    fullI-RNTI                          I-RNTI-Value,
    shortI-RNTI                         ShortI-RNTI-Value,
    ran-PagingCycle                     PagingCycle,
    ran-NotificationAreaInfo            RAN-NotificationAreaInfo                    OPTIONAL,    -- Need M
    t380                                PeriodicRNAU-TimerValue                     OPTIONAL,    -- Need R
    nextHopChainingCount                NextHopChainingCount,
    ...,
    [[
    Ran-PagingExtendedDRX-Info-r17      RAN-PagingExtendedDRX-Info-r17              OPTIONAL,    -- Need R
    ]]
}


RAN-PagingExtendedDRX-Info-r17 ::=      SEQUENCE {
    pagingExtendedDRX-Cycle-r17             ENUMERATED {hf1, hf2, hf4, hf6, hf8, hf10, hf12, hf14,
                                                    hf16, hf32, hf4, hf128, hf256, spare2, spare1}    OPTIONAL,    -- Need S
    pagingTimeWindow-r17                    ENUMERATED {s1, s2, s3, s4, s5, s6, s7, s8,
                                                    s9, s10, s11, s12, s13, s14, s15, s16}            OPTIONAL,    -- Need S
    pagingTimeWindowOffset-r17             INTEGER (0..3)
}
```

# Fig. 15

| SuspendConfig field descriptions |
|---|
| **pagingExtendedDRX-Cycle**<br><br>Refers to the UE specifiec extended DRX cycle for RAN-initiated paging. Value hf1 corresponds to 1 hyper frame, value hf2 corresponds to 2 hyper frames and so on. If this field is absent, the extended DRX cycle for RAN-initiated paging is the same as the one for CN-initiated paging configured by the NAS layer, as specified in TS 24.501. |
| **pagingTimeWindow**<br><br>Refers to the UE specific Paging Time Window for RAN-initiated paging. Value s1 corresponds to 1 second, value s2 corresponds to 2 seconds, and so on. If this field is absent, the Paging Timing Window for RAN-initiated paging is the same as the one for CN-initiated paging configured by the NAS layer, as specified in TS 24.501. |
| **pagingTimeWindowOffset**<br><br>An offset value to derive the start position of the paging timing window for RAN-initiated paging. |
| **ran-NotificationAreaInfo**<br><br>Network ensures that the UE in RRC_INACTIVE always has a valid ran-NotificationAreaInfo. |
| **ran-PagingCycle**<br><br>Refers to the UE specific cycle for RAN-initiated paging. Value rf32 corresponds to 32 radio frames, value rf64 corresponds to 64 radio frames and so on. |
| **t380**<br><br>Refers to the timer that triggers the periodic RNAU procedure in UE. Value min5 corresponds to 5 minutes, value min10 corresponds to 10 minutes and so on. |

## Fig. 16

10, 20, 30

| 11 | 13 |
|---|---|
| PROCESSOR | COMMUNICATION DEVICE |

| 12 | 14 |
|---|---|
| STORAGE DEVICE | INPUT/OUTPUT DEVICE |

EP 4 354 975 A1

EP 4 354 975 A1

# Fig. 17

# EP 4 354 975 A1

## INTERNATIONAL SEARCH REPORT

International application No.

**PCT/JP2022/023424**

### A. CLASSIFICATION OF SUBJECT MATTER

*H04W 52/02*(2009.01)i; *H04W 76/27*(2018.01)i
FI: H04W52/02 111; H04W76/27

According to International Patent Classification (IPC) or to both national classification and IPC

### B. FIELDS SEARCHED

Minimum documentation searched (classification system followed by classification symbols)

H04W52/02; H04W76/27

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | ERICSSON. Summary of [AT114-e][110][REDCAP] eDRX aspects (Ericsson)[online]. 3GPP TSG RAN WG2 #114-e R2-2106530. 25 May 2021 pp. 12-15 | 1, 3-5 |
| A | | 2 |

☐ Further documents are listed in the continuation of Box C.       ☐ See patent family annex.

| | |
|---|---|
| *    Special categories of cited documents: <br> "A"  document defining the general state of the art which is not considered to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
|---|---|
| **15 July 2022** | **26 July 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021098135 A

**Non-patent literature cited in the description**

- *3GPP TS 38.300 V15.11.0,* September 2020
- *3GPP TS 36.300 V15.12.0,* December 2020